# FASCICULE DE BREVET EUROPEEN

(11) **EP 3 551 704 B1**
(45) Date de publication et mention de la délivrance du brevet: **02.08.2023**
(21) Numéro de dépôt: 17808948.8
(22) Date de dépôt: 07.12.2017
(51) Int. Cl.: C09D 1/00, B05B 15/00, B05D 1/06, C09D 5/03, C23C 24/00, C09D 5/02, C09D 7/63, C21B 3/10, F27D 1/00, F27D 1/16, C09D 1/10

(54) **PROCÉDÉ DE MANUTENTION DE CUVE OU POCHE À LAITIER ET D'OUTILS PYRO-METALLURGIQUES**
HANDHABUNGSVERFAHREN FÜR SCHLACKENPFANNE ODER SCHLACKENGEFÄSS UND PYROMETALLURGISCHE GERÄTE
HANDLING PROCESS OF SLAG POT OR SADDLE AND PYROMETALLURGICAL TOOLS

(30) Priorité: 08.12.2016 BE 201605909
(43) Date de publication de la demande: 16.10.2019
(73) Titulaire: S.A. Lhoist Recherche et Développement, 1342 Ottignies-Louvain-la-Neuve (BE)
(72) Inventeur: DENOLLIN, Guillaume, 7021 Havré (BE)
(74) Mandataire: Gevers Patents
(86) Numéro de dépôt international: PCT/EP2017/081824
(87) Numéro de publication internationale: WO 2018/104448

(56) Documents cités:
- WO-A1-2005/092990
- US-A- 3 243 397
- US-A- 5 437 890

## Description

La présente invention concerne le domaine de la manutention des cuves et poches à laitier utilisées dans la métallurgie ferreuse ou non-ferreuse.

Typiquement, l'industrie pyro-métallurgique produit des laitiers, aussi appelé scories (en anglais « slag ») qui flottent au-dessus du bain de métal en fusion de par sa densité inférieure à celle du métal fondu.

La collecte du laitier est effectuée de différentes manières. Une première technique réside dans le basculement de la cuve dans laquelle il surnage au-dessus du bain de métal fondu. Le laitier peut aussi être collecté par raclage ou par débordement lors du basculement.

Il est alors récupéré dans des cuves ou poches à laitier (en anglais « slag pot » ou « slag laddle »), lesquelles sont typiquement formées de réfractaires, de fonte ou d'acier (en anglais cast iron ou steel).

Dans l'industrie métallurgique ferreuse, on distingue les laitiers de haut fourneau et les laitiers d'aciérie.

Le laitier de haut fourneau est un coproduit issu de la fabrication de la fonte dans un haut fourneau, où il correspond à la gangue stérile du minerai de fer à laquelle s'ajoutent des additions minérales et des cendres de combustible, notamment de coke, charbon et/ou combustibles alternatifs. Il se sépare donc de la fonte liquide par différence de densité.

La quantité de laitier produite est proportionnelle à la richesse du minerai de fer utilisé. Pour un haut fourneau fonctionnant avec une charge préparée à base de minerais riches en fer, on atteint généralement une proportion 180 à 300 kg de laitier pour une tonne de fonte produite.

Le laitier d'aciérie provient d'outils pyro-métallurgiques, tels que divers outils de raffinage comme les outils de désulfuration de la fonte, les convertisseurs transformant la fonte en acier (BOF-Basic Oxygen Furnace), les fours électriques (EAF-Electric Arc Firnace), les convertisseurs de raffinage des aciers inoxydables (AOD-Argon Oxygen Decarburization) et les divers outils de mise à nuance de métallurgie secondaire. Pour une tonne d'acier produite, on compte de 50 à 150 kg de laitier d'aciérie produits.

Le laitier d'aciérie a pour fonction de rassembler les impuretés et les éléments chimiques indésirables. Ces derniers se présentent dans la grande majorité des cas sous forme d'oxydes. Ils sont généralement générés au cours de l'utilisation de l'outil pyro-métallurgique concerné.

Pour cela, il est essentiel de gérer sa composition, de manière à le rendre réactif. Une haute teneur en chaux va, par exemple, rendre le laitier capable de capter les oxydes de phosphore au convertisseur, ce qui rend sa valorisation comme engrais envisageable. À la métallurgie en poche, une haute teneur en chaux rend le laitier basique, ce qui est favorable à la captation des inclusions d'alumine. Cependant, ce laitier doit aussi ménager les briques réfractaires.

La présente invention concerne plus particulièrement le domaine de la manutention des cuves et poches à laitier mais aussi des creusets et coques, par exemple, sans toutefois y être limité, en acier ou fonte, utilisés dans les ateliers de préparation du métal dans la métallurgie ferreuse ou non-ferreuse.

Plus particulièrement, le laitier concerné dans le cadre de la présente invention est le laitier d'aciérie ou de la métallurgie non ferreuse.

Dans le cadre de la présente invention, nous appellerons simplement « cuves à laitier », les cuves, poches, et analogues en acier ou fonte, comme par exemple celles destinées à collecter les laitiers d'aciérie ou de l'industrie métallurgique.

Dans l'industrie métallurgique, la manutention des cuves à laitier est souvent confiée à des sous-traitants, les cuves à laitier faisant partie de la chaudronnerie appartenant souvent à l'industrie métallurgique.

La manutention des cuves à laitier comprend donc une série d'étapes bien contrôlées dont le sous-traitant est chargé. Il s'agit entre autres de convoyer les cuves à laitiers entre l'outil pyro-métallurgique et le site de dépose de laitier ou il sera entreposé et/ou valorisé, déverser le contenu et ramener les cuves au four pour y collecter à nouveau du laitier.

Entre autres durant le convoyage des cuves à laitier, pour des raisons de sécurité, il convient de maintenir les cuves à laitier au-dessus de 150°C afin d'éviter toute accumulation d'eau. En effet, ceci engendrerait des explosions lors du versage du laitier lui-même à une température de plus de 1200°C. Il est par conséquent une pratique courante de chauffer les cuves à laitier avant leur mise en service.

Lors de l'utilisation en régime des cuves à laitier, leurs température reste stable et le plus souvent au-dessus de 250°C grâce à l'accumulation et la rétention de la chaleur provenant du laitier. La différence de coefficient de dilatation entre le laitier et la matière constituant la cuve devrait en effet engendrer des décollements lorsque la température de la cuve fluctue. Or, lors d'une utilisation en régime, cette dernière ne fluctue pas suffisamment pour engendrer des décollements. Par conséquent, la formation de « loup » ou de « mâchefer » (en anglais « skull » ou en allemand « bâr » ou en néérlandais « beer ») est favorisée. La présente invention vise entre-autres à pallier ce manque.

Bien entendu, la formation de « loup » ou de « mâchefer » est inhérente au processus et survient dans tous les cas. Toutefois, elle peut survenir de manière plus ou moins importante selon que le procédé de manutention est optimal ou non.

La formation de « loup » ou de « mâchefer » est également fonction de l'outil sidérurgique ayant engendré le laitier. Certain étant par nature physique et chimique plus prompt que d'autres à la formation de loups.

De plus, lorsque le nettoyage des cuves à laitier est long et qu'il faut « délouper » (retirer mécaniquement la couche de mâchefer ou le loup qui adhère aux parois de la cuve à laitier), les cuves à laitier refroidissent significativement suite à l'exposition aux conditions climatiques et à la durée du procédé de « déloupage » (« deskulling » en anglais ou « ontbeering » en néérlandais). Il faut alors les réchauffer ultérieurement. Toutefois, ce réchauffage représente une énergie calorifique importante trop coûteuse pour permettre de revenir dans les fourchettes de températures optimales autour de 250°C. Aussi, généralement, après nettoyage, les cuves sont réchauffées autour de 150°C pour les raisons de sécurité mentionnées ci-avant.

De nos jours, une couche minérale peut être déposée sur la paroi intérieure des cuves à laitier. Cette solution joue principalement sur la formation de phases de laitier intermédiaires. Par exemple, cette couche minérale déposée peut impliquer la formation d'une phase de laitier intermédiaire au moyen d'une réaction endothermique qui assure un effet de refroidissement, ou au contraire, la formation d'une phase intermédiaire à plus haut point de fusion, ou encore, jouent sur d'autres effet en relation avec une transformation de phase, comme en jouant sur la dilatation ou bien sur le retrait.

Ces techniques mentionnées ci-dessus utilisent principalement des suspensions réfractaires ou des suspensions minérales de chaux et de laitier en mélange. Toutefois, ces suspensions comprennent des composés en mélange dont la composition a un impact sur la composition du laitier dont les propriétés chimiques sont ainsi modifiées, comme par exemple la basicité (déterminée par le rapport de la quantité d'éléments basiques à la quantité d'éléments acides dans la fraction solide), basicité qui est modifiée en adaptant la basicité de la suspension selon la basicité du laitier versé dans la cuve ou poche à laitier.

Bien que ces solutions techniques impliquant des suspensions soient actuellement considérées comme fonctionnant correctement, elles sont aussi fortement dépendantes de la composition chimique et de l'homogénéité du laitier qui est versé dans les cuves ou poches à laitier. Par conséquent, comme la composition des laitiers n'est franchement pas toujours homogène, que sa composition globale peut aussi varier d'un outil à un autre ou même varier dans le temps pour un même outil, la composition de ces suspensions doit aussi être adaptée, ce qui rend le procédé particulièrement complexe et fort manuel. Ceci est par exemple décrit dans le document US 5437890.

Le document US5437890 divulgue un prétraitement des parois de cuves à laitier en matériaux réfractaires avec un mélange essentiellement minéral comprenant de la chaux, des fines de laitier et de l'eau afin d'éviter l'adhésion du laitier aux parois réfractaires, qui détruisent les parois de la cuve.

Dans le passé, parfois, des suspensions de chaux étaient utilisées dans ce type d'application. Les ateliers de l'industrie métallurgique produisaient alors grossièrement une suspension de chaux, lesquelles présentaient de nombreux inconvénients comme par exemple une faible efficacité, une épaisseur importante de revêtement sur les parois, la présence d'eau résiduelle dans la cuve ou dans la poche à laitier, ce qui représente un danger, des applications très sales et complexes, très manuelles et finalement, ces solutions étaient fort coûteuses en comparaison des faibles résultats obtenus en terme de simplification de la manutention.

Les documents JP2015094020 et le document JPS63295458 font par exemple état de traitement par des suspensions de chaux.

Par exemple, le document JP2015094020 divulgue un traitement de la surface intérieure des cuves à laitier par pulvérisation d'une suspension de chaux à utiliser dans le procédé de recyclage des laitiers chauds durant la réalisation du traitement de désulfurisation. La tubulure de pulvérisation de la suspension de chaux est reliée à un réservoir de suspension de chaux, dans laquelle la suspension de chaux présente une concentration en chaux de 13,5 à 15 % en poids par rapport au poids total de suspension de chaux. L'excès de suspension de chaux et d'eau de lavage toutes deux pulvérisées sur la surface interne des cuves à laitier retourne au réservoir de suspension de chaux.

Le document JPS63295458 divulgue également que de la chaux éteinte est alimentée sur la paroi des cuves à laitier pour faciliter la vidange de laitier à partir de la cuve, lorsque celui-ci est refroidi et pris en masse. Toutefois, ce document ne divulgue aucune caractéristique de la chaux, ni comment, ni même à quelle teneur elle est appliqué sur la paroi intérieure des cuves à laitier. De plus, il ne décrit rien quant à la dépose de laitier par déversage. Au contraire, selon ce document, on attend la prise en masse du laitier pour pouvoir le retirer de la cuve ou poche à laitier.

Comme on peut le constater, les techniques existantes utilisent soit des suspensions minérales dont la composition est complexe et requiert des étapes de formulation adaptable à la composition des laitiers ou bien des suspensions minérales très grossières, non contrôlées et finalement peu efficaces. Il reste donc un besoin de procurer au secteur de la manutention des cuves ou poches à laitier une solution optimisée, simple à mettre en oeuvre et efficace.

L'invention a pour but de pallier les inconvénients de l'état de la technique en procurant un procédé procurant un pré-traitement optimisé des cuves et poches à laitiers en acier ou en fonte afin de faciliter la manutention de celle-ci sur les sites sidérurgiques ou pyro-métallurgiques entre le point de collecte du laitier au niveau de l'outil sidérurgique ou pyro-métallurgique et le déversement du laitier dans un site de dépose, typiquement un site de mise en décharge (landfill en anglais).

Pour résoudre ce problème, il est prévu suivant l'invention un procédé de manutention de cuve ou poche à laitier comprenant une paroi intérieure et une paroi extérieure, ledit procédé comprenant les étapes de
a) collecte d'un laitier dans ladite cuve ou poche à laitier d'un outil pyro-métallurgique,
b) transport de ladite cuve ou poche à laitier dudit outil pyro-métallurgique audit site de dépose de laitier, typiquement au site de mise en décharge,
c) vidange de ladite cuve ou poche audit site de dépose de laitier, typiquement au site de mise en décharge pour éliminer le laitier qu'elle contient,
d) pulvérisation d'une suspension minérale sur ladite paroi intérieure de ladite cuve ou poche à laitier, préalablement à au moins une étape de ladite collecte dudit laitier, de manière à tapisser ladite paroi intérieure d'une couche minérale, et
e) mise en service de ladite cuve ou poche à laitier tapissée de ladite couche minérale en vue de la collecte de laitier a).

Le procédé selon la présente invention est caractérisé en ce que ladite couche minérale est une couche fine et en ce que ladite suspension minérale comprend une phase aqueuse, une phase minérale et éventuellement des additifs, ladite suspension minérale présente une teneur en hydrate de carbone comprise entre 0,2 et 3% de préférence entre 0,4 et 2 %, de manière plus préférentielle entre 0,5 et 1,5 %, de façon encore plus avantageuse entre 0,5% et 1% en poids par rapport au poids total de ladite suspension minérale.

Au sens de la présente invention, par les termes « mise en service », on entend la mise en circulation de la cuve ou poche à laitier pour le rôle qu'on attend d'une cuve ou poche à laitier, à savoir la collecte du laitier.

De manière particulièrement avantageuse, dans le procédé selon la présente invention, ladite couche minérale, tapissée sur la paroi intérieure présente une épaisseur de couche comprise entre 0,1 et 5 mm, de préférence entre 0,15 et 3 mm, de façon plus préférentielle entre 0,2 et 2 mm, en particulier entre 0,5 et 1 mm.

Comme on peut le constater, lorsqu'une suspension minérale présentant une teneur en hydrate de carbone comprise entre 0,2 et 3% en poids, par rapport au poids total de ladite suspension minérale, est tapissé sur la paroi intérieure des cuves ou poches à laitier, il a été remarqué de manière surprenante que le laitier qui y est versé n'adhérait pas ou très peu au moment du déversage en décharge. La couche minérale ainsi formée agit en tant qu'agent de démoulage formant une couche réduisant significativement la formation de mâchefer par réduction significative de l'adhérence entre la cuve ou poche à laitier et le laitier qui y est versé.

Au sens de la présente invention, les termes « cuve ou poche à laitier tapissée d'une couche minérale sur une surface, on entend qu'environ 70%, par exemple plus de 80%, en particulier plus de 85%, voire même plus de 90% de la surface est tapissée d'une couche minérale fine et homogène.

Au moment de la pulvérisation de la suspension minérale contenant un hydrate de carbone, l'eau contenue dans la suspension s'évapore presque instantanément au contact de la paroi chaude. Ceci engendrant une augmentation rapide de la concentration en hydrate de carbone jusqu'à typiquement former une colle faible favorisant l'adhérence des particules solides à la parois de la cuve à laitier, dû également à la température de la cuve ou poche à laitier, laquelle est supérieure à 100°C.

Au moment du déversement du laitier dans la cuve ou poche à laitier, en sortie de four, la température du laitier produit a priori une réaction de calcination de l'hydrate de carbone, qui facilite le démoulage du laitier, ce phénomène se produisant dès 700°C.

En effet, la couche minérale fine formée par pulvérisation permet typiquement de produire un plan de cisaillement derrière la couche minérale (à l'interface entre la paroi intérieure de la cuve ou poche à laitier et la couche minérale) au moment du déversement du laitier dans la cuve ou poche à laitier. Le plan de cisaillement peut être produit car la présence de l'hydrate de carbone joue a priori le rôle d'une colle faible, en comparaison de l'adhérence potentielle du laitier à la paroi intérieure de la cuve ou poche à laitier.

Ensuite, la couche minérale « collée » sur la paroi intérieure de la cuve ou poche à laitier est composée de particules minérales fines. La température de la cuve ou poche à laitier, juste avant le déversement du laitier présente une température typiquement de 100°C à 350°C, température à laquelle les particules minérales sont stables. La couche minérale peut donc être appliquée sur la cuve ou poche à laitier bien avant son utilisation. Les cuves ou poches à laitier ainsi revêtues, peuvent même être entreposées.

Dans une forme de réalisation particulière, dans lequel ladite phase minérale contient des particules calciques, choisies dans le groupe constitué de la chaux éteinte, de la dolomie décarbonatée au moins partiellement éteinte, du calcaire et de leurs mélanges.

Dans ce cas, si les particules calciques sont de la chaux éteinte ou de la dolomie décarbonatée au moins partiellement hydratée, au moment du déversement du laitier dans la cuve ou poche à laitier, en sortie de four, la température du laitier produit a priori une réaction de calcination de l'hydrate de carbone simultanément à la déshydratation de l'hydrate de calcium qui facilite le démoulage du laitier, ces phénomènes se produisant dès 700°C.

L'oxyde de calcium, CaO, est souvent appelé « chaux vive », tandis que l'hydroxyde de calcium, Ca(OH)₂, est appelé « chaux hydratée » ou « chaux éteinte », les deux composés étant parfois de manière informelle nommés « chaux ». En d'autres termes, la chaux est un produit industriel respectivement à base d'oxyde ou d'hydroxyde de calcium.

Par « chaux vive », on entend une matière solide minérale dont la composition chimique est principalement de l'oxyde de calcium, CaO. La chaux vive est généralement obtenue par calcination de calcaire (principalement composé de CaCO₃).

La chaux vive peut également contenir des impuretés telles que de l'oxyde de magnésium, MgO, de l'oxyde de soufre, SO₃, de la silice, SiO₂, ou encore de l'alumine, Al₂O₃, ..., dont la somme est à un taux de quelques % en poids. Les impuretés sont exprimées ici sous leur forme d'oxyde, mais bien sûr, elles peuvent apparaître sous différentes phases. La chaux vive contient généralement également quelques % en poids de calcaire résiduel, appelé résidus incuits.

La chaux vive appropriée selon la présente invention peut comprendre du MgO, exprimé sous la forme de MgO, en une quantité comprise dans la plage allant de 0,5 à 10 % en poids, de préférence inférieure ou égale à 5 % en poids, plus préférablement inférieure ou égale à 3 % en poids, de manière préférée entre toutes inférieure ou égale à 1 % en poids par rapport au poids total de la chaux vive.

Typiquement, pour former de la chaux éteinte, de la chaux vive est utilisée en présence d'eau. L'oxyde de calcium dans la chaux vive réagit rapidement avec l'eau pour former du dihydroxyde de calcium Ca(OH)₂, sous la forme de chaux éteinte ou de chaux hydratée, dans une réaction appelée réaction d'hydratation ou d'extinction qui est très exothermique. Dans ce qui suit, le dihydroxyde de calcium va être simplement appelé hydroxyde de calcium.

La chaux éteinte peut donc contenir les mêmes impuretés que celles de la chaux vive à partir de laquelle elle est produite.

La chaux éteinte peut également comprendre du Mg(OH)₂ en une quantité comprise dans la plage allant de 0,5 à 10 % en poids, de préférence inférieure ou égale à 5 % en poids, plus préférablement inférieure ou égale à 3 % en poids, de manière préférée entre toutes inférieure ou égale à 1 % en poids par rapport au poids total de la chaux éteinte.

La chaux éteinte peut également comprendre de l'oxyde de calcium, qui peut ne pas avoir été entièrement hydraté lors de l'étape d'extinction, ou du carbonate de calcium CaCO₃. Le carbonate de calcium peut provenir du calcaire initial (incuit) à partir duquel ladite chaux éteinte est obtenue (par l'intermédiaire de l'oxyde de calcium), ou provenir d'une réaction de carbonatation partielle de la chaux éteinte par contact avec une atmosphère contenant du CO₂.

La quantité d'oxyde de calcium dans la chaux éteinte selon la présente invention est généralement inférieure ou égale à 3 % en poids, de préférence inférieure ou égale à 2 % en poids et plus préférablement inférieure ou égale à 1 % en poids par rapport au poids total de la chaux éteinte.

La quantité de CO₂ dans la chaux éteinte (principalement sous la forme de CaCO₃) selon la présente invention est inférieure ou égale à 5 % en poids, de préférence inférieure ou égale à 3 % en poids, plus préférablement inférieure ou égale à 2 % en poids, par rapport au poids total de la chaux éteinte selon la présente invention.

Au sens de la présente invention, on entend par les termes « lait de chaux », une suspension de particules solides de chaux éteinte dans une phase aqueuse à une concentration supérieure ou égale à 200 g/kg. Les particules solides peuvent évidemment contenir des impuretés, à savoir des phases dérivées de SiO₂, Al₂O₃, Fe₂O₃, MnO, P₂O₅ et/ou SO₃, représentant globalement quelques dizaines de grammes par kilogramme. Ces particules solides peuvent aussi contenir de l'oxyde de calcium qui n'aurait pas été hydraté au cours de l'extinction, tout comme elles peuvent contenir du carbonate de calcium CaCO₃ et/ou de magnésium MgCO₃, éventuellement combiné sous la forme de dolomie.

Par analogie, au sens de la présente invention, on entend par les termes « lait de particules calciques », une suspension de particules calciques solides dans une phase aqueuse à une concentration supérieure ou égale à 200 g/kg.

La dolomie comprend à la fois du carbonate de calcium et du carbonate de magnésium en proportions variables ainsi que diverses impuretés. La cuisson de la dolomie provoque la libération de CO₂ (décarbonatation) et un produit dolomitique vif est obtenu, à savoir composé majoritairement de CaO et de MgO, bien que des carbonates, surtout du CaCO₃, peuvent subsister en quantité plus ou moins importante. Durant l'extinction pour produire une dolomie décarbonatée au moins partiellement hydratée, de l'eau est ajoutée afin d'hydrater la partie vive de la dolomie décarbonatée. L'avidité de CaO pour l'eau étant bien plus élevée que celle de MgO pour l'eau, il est souvent nécessaire d'hydrater sous pression, par exemple en autoclave avec pour résultat un produit au moins partiellement hydraté. Il est en effet courant qu'une partie du MgO reste sous forme de MgO. Les proportions Ca/Mg entre la partie oxyde, carbonate et hydrate étant fortement variables dans la dolomie décarbonatée au moins partiellement hydratée.

Par les termes « calcaire », on entend au sens de la présente invention un matériau minéral naturel issu du minerai calcaire ou, lorsque les propriétés doivent être contrôlées, issu de la carbonatation de la chaux vive. Le calcaire répond à la formule générale CaCO₃ et peut évidemment contenir des impuretés.

Dans une forme de réalisation préférée de la présente invention, ladite suspension minérale contient un lait de particules calciques contenant des particules calciques comprise entre 20 et 60 % en poids par rapport au poids dudit lait de particules calciques.

Dans une forme de réalisation particulièrement préférée du procédé selon la présente invention, ladite suspension minérale contient un lait de particules calciques est un lait de chaux contenant des particules de chaux éteinte à une teneur comprise entre 20 et 60 % en poids par rapport au poids dudit lait de chaux.

De cette manière, lorsque le laitier est déversé, la chaux éteinte se transforme en chaux vive à cause de la température du laitier (pouvant aller jusque 1200°C), qui est supérieure à la température de déshydratation de la chaux éteinte (environ 500°C). Cette transformation libère de la vapeur d'eau qui peut décoller le laitier déversé aux nombreux points d'accroche formés entre le laitier et la paroi intérieure de la cuve ou poche à laitier. Ceci réduit significativement la surface totale de laitier adhérant à la couche minérale formée de particules de chaux.

Même si le revêtement est appliqué et que la cuve ou poche à laitier est entreposée pendant une période de temps indéterminée, la couche minérale comprenant de l'hydroxyde de calcium se carbonate et se transforme ainsi en une couche de carbonate de calcium. Au moment où le laitier est déversé sur le carbonate de calcium, vu la température du laitier supérieure à 1200°C, le carbonate de calcium se décarbonate et forme de la chaux vive par libération de CO₂ et non plus de vapeur d'eau (bien que les deux phénomènes puissent se produire simultanément).

La concentration spécifique comprise entre 20 et 60% de particules de chaux éteinte dans le lait de chaux permet, lorsque du lait de chaux est pulvérisé, qu'une couche de chaux éteinte soit appliquée et de former une couche fine et homogène, qui ne joue pas significativement sur la concentration en chaux éteinte dans le laitier, mais également qui n'a pas pour résultat d'apporter de l'eau résiduelle dans le laitier, laquelle est dangereuse pour la manutention de la cuve ou poche à laitier.

En effet, comme on l'a indiqué précédemment, lorsque le lait de chaux est pulvérisé, la température de la cuve ou de la poche est supérieure à 100°C, ce qui conduit à l'évaporation de l'eau contenue dans le lait de chaux et laisse ainsi une couche de particules de chaux éteinte. Lorsque le laitier est déversé dans la cuve ou poche à laitier revêtue, les particules de chaux éteinte de la couche minérale se transforment in situ, intégralement en chaux vive. Toutefois, dans un cas comme dans l'autre, l'effet démoulant de la couche minérale permet que le laitier soit déversé en décharge, entraînant avec lui la couche minérale et laissant ainsi la cuve ou poche à laitier propre pour les opérations suivantes. Par conséquent, la manutention des cuves ou poches à laitier est simplifiée car il n'est plus nécessaire de procéder à l'enlèvement mécanique de mâchefer formé, ni de reporter la cuve ou la poche à une température suffisante pour sa mise en service. Une fois le laitier déposé en décharge, il ne faut que vaporiser à nouveau du lait de chaux à l'intérieur de la cuve.

La finesse de la couche ainsi que son homogénéité, étant une conséquence de la concentration et de la taille des particules de chaux éteinte dans le lait de chaux, revêt évidemment une importance considérable pour atteindre l'élimination de la couche minérale avec le laitier lors de la dépose en décharge, mais aussi simultanément pour atteindre l'effet « de démoulage » (en anglais « stripping effect »).

Avantageusement, lesdites particules de chaux dans le lait de chaux de ladite phase aqueuse minérale présentent une taille moyenne de particules d₅₀ comprise entre 1,5 µm et 10 µm.

De façon avantageuse, lesdites particules calciques dans le lait de particules calciques de ladite suspension minérale présentent une taille moyenne de particules d₅₀ inférieure ou égale à 8 µm, en particulier inférieure ou égale à 6 µm, plus particulièrement inférieure ou égale à 5 µm, tout particulièrement inférieure à 4 µm.

De façon avantageuse, lesdites particules calciques dans le lait de particules calciques de ladite suspension minérale présentent une taille moyenne de particules d₅₀ supérieure ou égale à 2 µm, en particulier supérieure ou égale à 2,5 µm.

La notation dₓ représente un diamètre, exprimé en µm, par rapport auquel X % des particules ou grains mesurées sont plus petites.

Plus les particules sont fines, mieux se produit la réaction de libération de vapeur d'eau ou de CO₂ qui permet le décollement du laitier tel qu'indiqué ci-avant.

Dans une forme de réalisation du procédé selon la présente invention, ledit lait de particules calciques présente une viscosité comprise entre 0,1 Pa.s et 2 Pa.s, soit entre 100 cps et 2000 cps. Avantageusement la viscosité est supérieure à 0,15 Pa.s et inférieure à 1 Pa.s, de préférence inférieure à 0,6 Pa.s, plus préférentiellement inférieure à 0,5 Pa.s, de façon encore plus préférentielle inférieure à 0,3 Pa.s.

La viscosité d'un lait de chaux est une propriété déterminante quant à la mise en oeuvre et la manipulation (pompage, transport en conduite,...) de la suspension. A cette fin, l'expérience a permis d'établir que la viscosité dynamique de la suspension doit être inférieure à 2 Pa.s (US 5616283) et qu'il est souhaitable de ne pas dépasser une viscosité dynamique de 1,5 Pa. s (WO 2007110401).

La viscosité dans le cadre de la présente invention est mesurée au moyen d'un viscosimètre (rhéomètre) Brookfield de type DV-III à 100 rotation/min (rpm) en utilisant une aiguille LV n°3.

Avantageusement, dans le procédé selon la présente invention, lesdites particules calciques du lait de particules calciques présentent une taille de particules d₉₇ comprise entre 7 et 100 µm.

De cette manière, elles sont suffisamment fines pour également contribuer à la formation d'une couche fine et homogène minérale participant à la simplification du démoulage du laitier.

Avantageusement, lesdites particules calciques du lait de particules calciques présentent une taille de particules d₉₇ supérieure ou égale à 10 µm et inférieure ou égale à 20 µm, en particulier inférieure ou égale à 15 µm).

La réactivité des laits de chaux est caractérisée au sens de la présente invention selon la norme européenne EN12485(2010), § 6.11 « Détermination of solubility index by conductivity ». Cette méthode est elle-même dérivée des travaux de van Eekeren et coll. divulgués dans le document "'Improved milk-of-lime for softening of drinking water', M.W.M. van Eekeren, J.A.M. van Paassen, C.W.A.M. Merks, KIWA NV Research and Consultancy, Nieuwegein, Septembre 1993" produit et distribué par le KIWA, Institut Royal Néerlandais de l'analyse de l'eau (KIWA NV Research and Consultancy, Groningenhaven 7, P.O. Box 1072, 3430BB Nieuwegein).

La réactivité d'un lait de chaux est donc évaluée par l'évolution au cours du temps de la mesure de la conductivité d'une solution préparée en diluant une petite quantité de lait de chaux dans un grand volume d'eau déminéralisée. On repère notamment les points correspondants à une conductivité de x % pour x % = 63 %, 80 %, 90 % and 95 % de la conductivité maximale en point final (voir EN12485(2010) §6.11.6.2). Le *temps de dissolution* correspondant *t*(*x%*) en s, est alors obtenu du graphique conductivité vs. temps (voir Figure 2 de EN12485(2010)).

Il est connu que le taux de dissolution des particules de chaux dans l'eau déminéralisée est plus rapide (t(x%) plus petit) lorsque la taille des particules est plus petite. En d'autres termes, la réactivité du lait de chaux est généralement plus élevée lorsque ses particules constitutives sont plus petites.

Dans un mode préféré du procédé selon la présente invention, lorsque ladite suspension minérale contient ou est un lait de chaux, celui-ci présente une réactivité exprimée sous la forme d'un temps de dissolution t(90%) supérieur à 0,1 s en particulier supérieur à 0,2 s et inférieur à 10 s, en particulier inférieur à 5 s.

Lorsque le lait de chaux présente une telle réactivité, les particules de chaux éteinte présentent une taille de particules suffisamment fines pour également contribuer à la formation d'une couche minérale fine, en particulier homogène, participant à la simplification du démoulage du laitier.

La stabilité du lait de particules calciques ou de la suspension minérale peut-être déterminée en utilisant la méthode de stabilité appelée test de la bouteille tel que décrit dans le document WO 2001/096240

Dans une forme de réalisation particulière de la présente invention, ledit hydrate de carbone est choisi dans le groupe constitué des disaccharides, tel que le sucrose ou le saccharose, du sorbitol, des monosaccharides, des oligosaccharides, du xylose, du glucose, du galactose, du fructose, du mannose, du lactose, du maltose, de l'acide glucuronique, de l'acide gluconique, de l'érythritol, du xylitol, du lactitol, du maltitol, des dextrines, des cyclodextrines, de l'inuline, du glucitol, de l'acide uronique, du rhamnose, de l'arabinose, de l'érythrose, du thréose, du ribose, de l'allose, du tréhalose, de l'acide galacturonique, et leurs mélanges.

Dans une forme de réalisation particulièrement préférée du procédé selon la présente invention, ledit hydrate de carbone est choisi dans le groupe constitué des disaccharides, tels que le sucrose ou le saccharose, du sorbitol et de leurs mélanges.

Outre l'aspect du coût réduit de ces hydrates de carbone, combiné à leur parfaite compatibilité avec le lait de chaux, ces hydrates de carbone sont connus pour réduire la viscosité du lait de chaux et la maintenir faible au cours du temps, facilitant dès lors les conditions d'entreposage du lait de chaux.

Dans le cadre de la présente application, cette viscosité contrôlée et fiable est d'une importance fondamentale dans la facilité de réalisation d'un revêtement homogène.

Comme mentionné précédemment, la suspension minérale peut comprendre également des additifs, en particulier des additifs dispersants ou fluidifiants, par exemple à une teneur massique entre 0 et 5 %, par rapport au poids de ladite suspension minérale. Préférentiellement, la teneur en additifs susdits est inférieure ou égale à 3%, en particulier inférieure ou égale à 2%, plus particulièrement inférieure ou égale à 1,5% par rapport au poids de ladite suspension minérale. De préférence, la teneur en additifs susdits est supérieure ou égale à 0,2%, avantageusement supérieure ou égale à 0,5%, par rapport au poids de ladite suspension minérale .

Il est entendu que plusieurs additifs précités peuvent être présents dans la dite suspension minérale, avec un ou plusieurs hydrates de carbone et éventuellement un ou plusieurs agents dispersants ou fluidifiants

Ces additifs peuvent être par exemple des additifs polymères ou minéraux comme par exemple des polymères anioniques ou des polymères acides, de l'acide borique et des sels solubles dans l'eau de l'acide borique, comme par exemple des borates de métal alcalin, des borates d'aluminium, des acides carboxyliques en C₂ à C₁₀, par exemple contenant au moins 2 groupes acides et les sels de ceux-ci, comme par exemple les sels de métaux alcalins ou les sels d'ammonium ; des hydroxydes, des carbonates, des sulfates, des nitrates, des phosphates, des silicates de métaux alcalins ou d'ammonium.

Le terme "polymère anionique" utilisé dans le cadre de la présente invention décrit tous les polymères contenant des groupes acides, sous forme libre, neutralisée ou partiellement neutralisée.

Des exemples de tels polymères anioniques, qui sont appropriés dans le cadre de la présente invention peuvent être choisis parmi les dispersants anioniques disponibles dans le commerce utilisés pour la production de suspensions minérales comme les :
- homopolymères préparés en utilisant un monomère acide tel que l'acide acrylique, l'acide méthacrylique, l'acide maléique, l'anhydride maléique, l'acide fumarique, l'acide itaconique, l'anhydride itaconique, l'acide aconitique, l'acide crotonique, l'acode isocrotonique, l'acide mésaconique, l'acide acétique vinylique, l'acide hydroxyacrylique, l'acide undécylénique, l'acide sulphonique allylique, l'acide sulphonique vinylique, l'acide phosphonique allylique, l'acide phosphonique vinylique, l'acide 2-acrylamido-2-methyl propane sulphonique ou l'acide 2-acrylamidoglycolique.
- copolymères préparés en utilisant au moins un monomère du groupe mentiooné ci-dessus et éventuellement un ou plusieurs monomère non acide comme par exemple l'acrylamide, les esters d'acide acrylique, l'acroléine, les esters d'acide méthacrylique, les esters d'acide maléique, les esters d'acide itaconique, les esters d'acide fumarique, l'acétate de vinyle, l'acrylonitrile, le styrène, l'alpha-méthyl styrène, la N-vinyle pyrrolidone, l'acrylate de 2-hydroxyéthyle, le méthacrylate de 2-hydroxyéthyle, l'acrylamide diméthylique, le N-(hydroxyméthyl)acrylamide ou le formamide vinylique.

Ces polymères peuvent être sous forme d'acide libre, de sels de métal alcalin, partiellement ou intégralement, de sels mixtes, solubles dans l'eau. Les polymères anioniques préférés sont formés d'acide acrylique avec l'un ou l'autre des monomères choisis parmi l'acrylamide, le diméthylacrylamide, l'acide méthacrylique, l'acide maléique ou l'AMPS ( acide 2-acrylamido-2-methylpropane sulfonique ) dans une composition préférée de 100:0 à 50:50 (en poids) et intégralement neutralisé sous forme d'un sel de sodium.

Dans une forme de réalisation particulière de la présente invention, ledit dispersant ou agent fluidifiant est un phosphonate ou un acide phosphonique choisi parmi les acides organophosphoniques, azotés ou non, ou leurs sels, plus particulièrement dans le groupe constitué des acides aminoalkylène polyphosphoniques, où le radical alkylène contient de 1 à 20 atomes de carbone, des acides hydroxyalkylidène polyphosphoniques, où le radical alkylidène contient de 2 à 50 atomes de carbone, des acides phosphono-alcanepolycarboxyliques, où le groupement alcane contient de 3 à 12 atomes de carbone et où le rapport molaire du radical acide alkylphosphonique au radical acide carboxylique est dans la plage de 1:2 à 1:4, leurs dérivés, tels que leurs sels, et leurs mélanges.

Dans une autre forme de réalisation particulière de l'invention, ledit phosphonate ou acide phosphonique comprend, sous forme acide, de 2 à 8, de préférence de 2 à 6 groupes caractéristiques « acide phosphonique ».

Plus particulièrement, ledit phosphonate ou acide phosphonique est choisi dans le groupe constitué de l'acide aminotris(méthylènephosphonique) (ATMP), de l'acide 1-hydroxyéthylidène-1,1-diphosphonique (HEDP), de l'acide éthylènediamine tetrakis(méthylènephosphonique) (EDTMP), de l'acide hexaméthylènediamine tetrakis(méthylènephosphonique) (HDTMP), de l'acide diéthylènetriamine pentakis(méthylènephosphonique) (DTPMP), de l'acide (2-hydroxy)éthylamino-N,N-bis(méthylènephosphonique) (HEMPA), de l'acide 2-phosphono-1,2,4-butanetricarboxylique (PBTC), de l'acide 6-amino-1-hydroxyhexylène-N,N-diphosphonique (acide néridronique), de l'acide N,N'-bis(3-aminopropyl)éthylènediamine hexakis(méthylènephosphonique), de l'acide bis(hexaméthylènetriamine) pentakis(méthylènephosphonique), de l'oxyde de l'acide aminotris(méthylènephosphonique),leurs dérivés tels que leurs sels et leurs mélanges.

Plus particulièrement, en plus dudit un ou plusieurs hydrate de carbone, le lait de chaux comprend au moins un additif choisi parmi les dispersants et les additifs fluidifiants et leurs mélanges, tels des polycarbonates ou des polyacrylates, , ou des polyphosphonates, en particulier du DTPMP.

Plus particulièrement, dans le procédé selon la présente invention, ledit lait de chaux présente une teneur en particules de chaux éteinte supérieure ou égale à 25% en poids, de préférence, supérieure ou égale à 27% en poids, de préférence supérieure ou égale à 30% en poids, de préférence supérieure ou égale à 35% en poids, par rapport au poids total du lait de chaux et une teneur en particules de chaux éteinte inférieure ou égale à 55% en poids, de préférence, inférieure ou égale à 50 % en poids, de préférence inférieure ou égale à 48 % en poids, par rapport au poids total du lait de chaux.

Plus particulièrement, dans le procédé selon la présente invention, ledit lait de particules calcique présente une teneur en particules calciques supérieure ou égale à 25% en poids, de préférence, supérieure ou égale à 27% en poids, de préférence supérieure ou égale à 30% en poids, de préférence supérieure ou égale à 35% en poids, par rapport au poids total du lait de particules calciques et une teneur en particules calciques inférieure ou égale à 55% en poids, de préférence, inférieure ou égale à 50 % en poids, de préférence inférieure ou égale à 48 % en poids, par rapport au poids total du lait de particules calciques.

D'autres formes de réalisation du procédé suivant l'invention sont indiquées dans les revendications annexées.

L'invention a aussi pour objet une utilisation d'une suspension minérale pour tapisser une paroi intérieure d'une cuve ou d'une poche à laitier d'une couche minérale, dans laquelle ladite suspension minérale est pulvérisé et présente une teneur en hydrate de carbone entre 0,2 et 3% de préférence entre 0,4 et 2 %, de manière plus préférentielle entre 0,5 et 1,5 %, de façon encore plus avantageuse entre 0,5% et 1% en poids par rapport au poids total de ladite suspension minérale.

Comme on peut le constater, lorsqu'une suspension minérale présentant une teneur en hydrate de carbone comprise entre 0,2 et 3% en poids, par rapport au poids total de ladite suspension minérale, est tapissé sur la paroi intérieure des cuves ou poches à laitier, il a été remarqué de manière surprenante que le laitier qui y est versé n'adhérait pas ou très peu au moment du déversage en décharge. La couche minérale ainsi formée agit en tant qu'agent de démoulage formant une couche réduisant significativement la formation de mâchefer par réduction significative de l'adhérence entre la cuve ou poche à laitier et le laitier qui y est versé.

Au moment de la pulvérisation de la suspension minérale contenant un hydrate de carbone, l'eau contenue dans la suspension s'évapore presque instantanément au contact de la paroi chaude. Ceci engendrant une augmentation rapide de la concentration en hydrate de carbone jusqu'à former a priori une colle faible favorisant l'adhérence des particules calciques à la parois de la cuve à laitier, due également à la température de la cuve ou poche à laitier, laquelle est supérieure à 100°C.

Au moment du déversement du laitier dans la cuve ou poche à laitier, en sortie de four, la température du laitier produit une réaction de calcination de l'hydrate de carbone, qui facilite le démoulage du laitier, ce phénomène se produisant dès 700°C.

En effet, la couche minérale fine formée par pulvérisation permet typiquement de produire un plan de cisaillement derrière la couche minérale (à l'interface entre la paroi intérieure de la cuve ou poche à laitier et la couche minérale) au moment du déversement du laitier dans la cuve ou poche à laitier. Le plan de cisaillement peut être produit car la présence de l'hydrate de carbone joue le rôle d'une colle faible, en comparaison de l'adhérence potentielle du laitier à la paroi intérieure de la cuve ou poche à laitier.

Ensuite, la couche minérale « collée » sur la paroi intérieure de la cuve ou poche à laitier est composée de particules minérales fines. La température de la cuve ou poche à laitier, juste avant le déversement du laitier présente une température typiquement de 100°C à 350°C, température à laquelle les particules minérales sont stables. La couche minérale peut donc être appliquée sur la cuve ou poche à laitier bien avant son utilisation. Les cuves ou poches à laitier ainsi revêtues, peuvent même être entreposées.

Avantageusement, ladite couche minérale présente une épaisseur de couche comprise entre 0,1 et 5 mm, de préférence entre 0,15 et 3 mm, de façon plus préférentielle entre 0,2 et 2 mm, en particulier entre 0,5 et 1 mm.

Dans une forme d'utilisation particulière selon la présente invention, ladite suspension minérale contient des particules calciques, choisies dans le groupe restreint constitué de la chaux éteinte, de la dolomie décarbonatée au moins partiellement éteinte, du calcaire et de leurs mélanges et dans laquelle la couche minérale est une couche de particules calciques.

Dans ce cas, si les particules calciques sont de la chaux éteinte ou de la dolomie décarbonatée au moins partiellement hydratée, au moment du déversement du laitier dans la cuve ou poche à laitier, en sortie de four, la température du laitier produit a priori une réaction de calcination de l'hydrate de carbone simultanément à la déshydratation de l'hydrate de calcium qui facilite le démoulage du laitier, ces phénomènes se produisant dès 700°C.

Avantageusement, la suspension minérale comprend également des additifs tels que mentionnés ci-dessus.

Dans une forme préférée d'utilisation, ladite suspension minérale contient un lait de particules calciques contenant des particules calciques comprise entre 20 et 60 % en poids par rapport au poids dudit lait de particules calciques.

Dans une autre forme préférée d'utilisation, dans laquelle ladite suspension minérale contient un lait de particules calciques est un lait de chaux contenant des particules de chaux éteinte à une teneur comprise entre 20 et 60 % en poids par rapport au poids dudit lait de chaux.

De préférence, lesdites particules calciques dans le lait de particules calciques de ladite suspension minérale présentent une taille moyenne de particules d₅₀ comprise entre 1,5 µm et 10 µm.

De façon avantageuse, lesdites particules calciques dans le lait de particules calciques de ladite suspension minérale présentent une taille moyenne de particules d₅₀ inférieure ou égale à 8 µm, en particulier inférieure ou égale à 6 µm, plus particulièrement inférieure ou égale à 5 µm, tout particulièrement inférieure à 4 µm.

De façon avantageuse, lesdites particules calciques dans le lait de particules calciques de ladite suspension minérale présentent une taille moyenne de particules d₅₀ supérieure ou égale à 2 µm, en particulier supérieure ou égale à 2,5 µm.

Dans encore une forme préférée d'utilisation, ledit hydrate de carbone est choisi dans le groupe constitué des disaccharides, tel que le sucrose ou le saccharose, du sorbitol, des monosaccharides, des oligosaccharides, du xylose, du glucose, du galactose, du fructose, du mannose, du lactose, du maltose, de l'acide glucuronique, de l'acide gluconique, de l'érythritol, du xylitol, du lactitol, du maltitol, des dextrines, des cyclodextrines, de l'inuline, du glucitol, de l'acide uronique, du rhamnose, de l'arabinose, de l'érythrose, du thréose, du ribose, de l'allose, du tréhalose, de l'acide galacturonique, et leurs mélanges.

De manière préférentielle, ledit hydrate de carbone est choisi dans le groupe constitué des disaccharides, tels que le sucrose ou le saccharose, du sorbitol et de leurs mélanges.

Plus particulièrement, en plus dudit un ou plusieurs hydrate de carbone, le lait de chaux comprend au moins un additif choisi parmi les dispersants et les additifs fluidifiants et leurs mélanges, tels des polycarbonates ou des polyacrylates, ou des polyphosphonates, en particulier du DTPMP.

De manière avantageusement, ledit lait de particules calciques présente une viscosité comprise entre 0,1 Pa.s et 2 Pa.s.

Dans une utilisation préférentielle de la présente invention, lesdites particules calciques du lait de particules calciques présentent une taille de particules d₉₇ comprise entre 7 et 100 µm.

Plus particulièrement, lorsque ladite suspension minérale comprend ou est un lait de chaux, ledit lait de chaux présente une teneur en particules de chaux éteinte supérieure ou égale à 25% en poids, de préférence, supérieure ou égale à 27% en poids, de préférence supérieure ou égale à 30% en poids, de préférence supérieure ou égale à 35% en poids, par rapport au poids total du lait de chaux et une teneur en particules de chaux éteinte inférieure ou égale à 55% en poids, de préférence, inférieure ou égale à 50 % en poids, de préférence inférieure ou égale à 48 % en poids, par rapport au poids total du lait de chaux.

Alternativement, ledit lait de particules calcique présente une teneur en particules calciques supérieure ou égale à 25% en poids, de préférence, supérieure ou égale à 27% en poids, de préférence supérieure ou égale à 30% en poids, de préférence supérieure ou égale à 35% en poids, par rapport au poids total du lait de particules calciques et une teneur en particules calciques inférieure ou égale à 55% en poids, de préférence, inférieure ou égale à 50 % en poids, de préférence inférieure ou égale à 48 % en poids, par rapport au poids total du lait de particules calciques.

D'autres formes d'utilisation selon la présente invention sont mentionnées dans les revendications annexées.

La présente invention se rapporte aussi à un procédé de manutention d'outil pyro-métallurgiques comprenant une paroi intérieure et une paroi extérieure, ledit procédé comprenant les étapes de
a) Utilisation dudit outil pyro-métallurgique,
b) Nettoyage dudit outil pyro-métallurgique,
c) Pulvérisation d'une suspension minérale sur ladite paroi intérieure et/ou sur ladite paroi extérieure dudit outil pyro-métallurgique, préalablement à au moins une étape d'utilisation dudit outil pyro-métallurgique, de manière à tapisser ladite paroi intérieure et/ou ladite paroi extérieure d'une couche minérale, et
d) mise en service dudit outil pyro-métallurgique dont ladite paroi intérieure et/ou sur ladite paroi extérieure est tapissée de ladite couche minérale en vue de son utilisation a).

Ladite paroi extérieure est parfois appelée aussi chaudronnerie (« shell » en anglais ou « pantser » en néérlandais.

De tels outils pyro-métallurgiques sont par exemple les outils de raffinage comme les outils de désulfuration de la fonte, les convertisseurs transformant la fonte en acier (BOF), les fours électriques (EAF), les convertisseurs de raffinage des aciers inoxydables (AOD) et les divers outils de mise à nuance de métallurgie secondaire, mais aussi les creusets et coques ou analogue généralement utilisés.

Le procédé de manutention d'outils pyro-métallurgiques décrit ci-dessus est caractérisé en ce que ladite couche minérale est une couche fine et en ce que ladite suspension minérale comprend une phase aqueuse, une phase minérale et éventuellement des additifs, ladite suspension minérale présente une teneur en hydrate de carbone comprise entre 0,2 et 3% de préférence entre 0,4 et 2 %, de manière plus préférentielle entre 0,5 et 1,5 %, de façon encore plus avantageuse entre 0,5% et 1% en poids par rapport au poids total de ladite suspension minérale.

Comme on peut le constater, lorsqu'une suspension minérale présentant une teneur en hydrate de carbone comprise entre 0,2 et 3% en poids, par rapport au poids total de ladite suspension minérale, est tapissé sur la paroi intérieure et/ou la paroi extérieure des outils pyro-matallurgiques, il a été remarqué de manière surprenante que la fréquence de manutention de ces outils pyro-métallurgique était significativement réduite et plus aisée.

Dans une forme préférée du procédé selon la présente invention, ladite phase minérale contient des particules calciques, choisies dans le groupe constitué de la chaux éteinte, de la dolomie décarbonatée au moins partiellement éteinte, du calcaire et de leurs mélanges.

Dans une forme de réalisation particulière, ladite suspension minérale contient un lait de particules calciques contenant des particules calciques comprise entre 20 et 60 % en poids par rapport au poids dudit lait de particules calciques.

Dans une autre forme de réalisation particulière, ladite suspension minérale contient un lait de particules calciques est un lait de chaux contenant des particules de chaux éteinte à une teneur comprise entre 20 et 60 % en poids par rapport au poids dudit lait de chaux.

Plus particulièrement, selon la présente invention, lesdites particules calciques dans le lait de particules calciques de ladite phase aqueuse présentent une taille moyenne de particules d₅₀ comprise entre 1,5 µm et 10 µm.

De façon avantageuse, lesdites particules calciques dans le lait de particules calciques de ladite suspension minérale présentent une taille moyenne de particules d₅₀ inférieure ou égale à 8 µm, en particulier inférieure ou égale à 6 µm, plus particulièrement inférieure ou égale à 5 µm, tout particulièrement inférieure à 4 µm.

De façon avantageuse, lesdites particules calciques dans le lait de particules calciques de ladite suspension minérale présentent une taille moyenne de particules d₅₀ supérieure ou égale à 2 µm, en particulier supérieure ou égale à 2,5 µm.

Avantageusement, dans le procédé selon la présente invention, ledit hydrate de carbone est choisi dans le groupe constitué des disaccharides, tel que le sucrose ou le saccharose, du sorbitol, des monosaccharides, des oligosaccharides, du xylose, du glucose, du galactose, du fructose, du mannose, du lactose, du maltose, de l'acide glucuronique, de l'acide gluconique, de l'érythritol, du xylitol, du lactitol, du maltitol, des dextrines, des cyclodextrines, de l'inuline, du glucitol, de l'acide uronique, du rhamnose, de l'arabinose, de l'érythrose, du thréose, du ribose, de l'allose, du tréhalose, de l'acide galacturonique, et leurs mélanges.

Plus particulièrement, dans le procédé selon la présente invention, ledit hydrate de carbone est choisi dans le groupe constitué des disaccharides, tels que le sucrose ou le saccharose, du sorbitol et de leurs mélanges.

De préférence, ledit lait de particules calciques présente une viscosité comprise entre 0,1 Pa.s et 2 Pa.s.

De manière plus préférentielle, lesdites particules calciques du lait de particules calciques présentent une taille de particules d₉₇ comprise entre 7 et 100 µm.

La réactivité des laits de chaux est caractérisée au sens de la présente invention selon la norme européenne EN12485(2010), § 6.11 « Détermination of solubility index by conductivity ». Cette méthode est elle-même dérivée des travaux de van Eekeren et coll. divulgués dans le document "'Improved milk-of-lime for softening of drinking water', M.W.M. van Eekeren, J.A.M. van Paassen, C.W.A.M. Merks, KIWA NV Research and Consultancy, Nieuwegein, Septembre 1993" produit et distribué par le KIWA, Institut Royal Néerlandais de l'analyse de l'eau (KIWA NV Research and Consultancy, Groningenhaven 7, P.O. Box 1072, 3430BB Nieuwegein).

La réactivité d'un lait de chaux est donc évaluée par l'évolution au cours du temps de la mesure de la conductivité d'une solution préparée en diluant une petite quantité de lait de chaux dans un grand volume d'eau déminéralisée. On repère notamment les points correspondants à une conductivité de x % pour x % = 63 %, 80 %, 90 % and 95 % de la conductivité maximale en point final (voir EN12485(2010) §6.11.6.2). Le *temps de dissolution* correspondant *t(x%)* en s, est alors obtenu du graphique conductivité vs. temps (voir Figure 2 de EN12485(2010)).

Il est connu que le taux de dissolution des particules de chaux dans l'eau déminéralisée est plus rapide (t(x%) plus petit) lorsque la taille des particules est plus petite. En d'autres termes, la réactivité du lait de chaux est généralement plus élevée lorsque ses particules constitutives sont plus petites.

Dans un mode préféré du procédé selon la présente invention, lorsque ladite suspension minérale contient ou est un lait de chaux, celui-ci présente une réactivité exprimée sous la forme d'un temps de dissolution t(90%) supérieur à 0,1 s en particulier supérieur à 0,2 s et inférieur à 10 s, en particulier inférieur à 5 s.

Lorsque le lait de chaux présente une telle réactivité, les particules de chaux éteinte présentent une taille de particules suffisamment fines pour également contribuer à la formation d'une couche minérale fine, en particulier homogène, participant à la simplification du démoulage du laitier.

La stabilité du lait de particules calciques ou de la suspension minérale peut être déterminée en utilisant la méthode de stabilité appelée test de la bouteille tel que décrit dans le document WO 2001/096240.

De préférence, lesdits additifs de ladite suspension minérale sont choisis dans le groupe constitué des dispersants et des additifs fluidifiants et leur mélange, tels des polycarbonates ou des polyacrylates, ou des polyphosphonates, en particulier du DTPMP.

Les dispersants ou les agents fluidifiants qui peuvent être utilisés dans le cadre de la présente invention ont été mentionné précédemment.

Il est entendu que plusieurs additifs précités peuvent être présents dans la dite suspension minérale, en particulier un ou plusieurs hydrates de carbone avec un ou plusieurs agents dispersants ou fluidifiants.

Plus particulièrement, ledit lait de chaux présente une teneur en particules de chaux éteinte supérieure ou égale à 25% en poids, de préférence, supérieure ou égale à 27% en poids, de préférence supérieure ou égale à 30% en poids, de préférence supérieure ou égale à 35% en poids, par rapport au poids total du lait de chaux et une teneur en particules de chaux éteinte inférieure ou égale à 55% en poids, de préférence, inférieure ou égale à 50 % en poids, de préférence inférieure ou égale à 48 % en poids, par rapport au poids total du lait de chaux.

Avantageusement, ledit lait de particules calcique présente une teneur en particules calciques supérieure ou égale à 25% en poids, de préférence, supérieure ou égale à 27% en poids, de préférence supérieure ou égale à 30% en poids, de préférence supérieure ou égale à 35% en poids, par rapport au poids total du lait de particules calciques et une teneur en particules calciques inférieure ou égale à 55% en poids, de préférence, inférieure ou égale à 50 % en poids, de préférence inférieure ou égale à 48 % en poids, par rapport au poids total du lait de particules calciques.

Dans encore un mode préféré selon la présente invention, ladite couche minérale, tapissée sur la paroi intérieure et/ou sur la paroi extérieure présente une épaisseur de couche comprise entre 0,1 et 5 mm, de préférence entre 0,15 et 3 mm, de façon plus préférentielle entre 0,2 et 2 mm, en particulier entre 0,5 et 1 mm.

D'autres formes de réalisation du procédé de manutention d'outils pyro-métallurgiques sont indiquées dans les revendications annexées.

La présente invention se rapporte enfin également à une utilisation d'une suspension minérale pour tapisser une paroi intérieure et/ou d'une paroi extérieure d'une couche minérale d'un outil pyro-métallurgique pour réduire la fréquence de manutention dudit outil pyro-métallurgique, dans laquelle ladite suspension minérale est pulvérisée et présente une teneur en hydrate de carbone entre 0,2 et 3% de préférence entre 0,4 et 2 %, de manière plus préférentielle entre 0,5 et 1,5 %, de façon encore plus avantageuse entre 0,5% et 1% en poids par rapport au poids total de ladite suspension minérale.

Comme on peut le constater, lorsqu'une suspension minérale présentant une teneur en hydrate de carbone comprise entre 0,2 et 3 % en poids, par rapport au poids total de ladite suspension minérale, est tapissé sur la paroi intérieure et/ou la paroi extérieure des outils pyro-matallurgiques, il a été remarqué de manière surprenante que la fréquence de manutention de ces outils pyro-métallurgiques était significativement réduite et plus aisée.

Dans une utilisation préférée selon la présente invention, ladite phase minérale contient des particules calciques, choisies dans le groupe constitué de la chaux éteinte, de la dolomie décarbonatée au moins partiellement éteinte, du calcaire et de leurs mélanges.

Dans une utilisation particulière, ladite suspension minérale contient un lait de particules calciques contenant des particules calciques comprise entre 20 et 60 % en poids par rapport au poids dudit lait de particules calciques.

Dans une autre utilisation particulière, ladite suspension minérale contient un lait de particules calciques est un lait de chaux contenant des particules de chaux éteinte à une teneur comprise entre 20 et 60 % en poids par rapport au poids dudit lait de chaux.

Plus particulièrement, selon la présente invention, lesdites particules calciques dans le lait de particules calciques de ladite phase aqueuse présentent une taille moyenne de particules d₅₀ comprise entre 1,5 µm et 10 µm.

De façon avantageuse, lesdites particules calciques dans le lait de particules calciques de ladite suspension minérale présentent une taille moyenne de particules d₅₀ inférieure ou égale à 8 µm, en particulier inférieure ou égale à 6 µm, plus particulièrement inférieure ou égale à 5 µm, tout particulièrement inférieure à 4 µm.

De façon avantageuse, lesdites particules calciques dans le lait de particules calciques de ladite suspension minérale présentent une taille moyenne de particules d₅₀ supérieure ou égale à 2 µm, en particulier supérieure ou égale à 2,5 µm.

Avantageusement, dans l'utilisation selon la présente invention, ledit hydrate de carbone est choisi dans le groupe constitué des disaccharides, tel que le sucrose ou le saccharose, du sorbitol, des monosaccharides, des oligosaccharides, du xylose, du glucose, du galactose, du fructose, du mannose, du lactose, du maltose, de l'acide glucuronique, de l'acide gluconique, de l'érythritol, du xylitol, du lactitol, du maltitol, des dextrines, des cyclodextrines, de l'inuline, du glucitol, de l'acide uronique, du rhamnose, de l'arabinose, de l'érythrose, du thréose, du ribose, de l'allose, du tréhalose, de l'acide galacturonique, et leurs mélanges.

Plus particulièrement, dans l'utilisation selon la présente invention, ledit hydrate de carbone est choisi dans le groupe constitué des disaccharides, tels que le sucrose ou le saccharose, du sorbitol et de leurs mélanges.

De préférence, ledit lait de particules calciques présente une viscosité comprise entre 0,1 Pa.s et 2 Pa.s, soit entre 100 cps et 2000 cps.

De manière plus préférentielle, lesdites particules calciques du lait de particules calciques présentent une taille de particules d₉₇ comprise entre 7 et 100 µm.

La réactivité des laits de chaux est caractérisée au sens de la présente invention selon la norme européenne EN12485(2010), § 6.11 « Détermination of solubility index by conductivity ». Cette méthode est elle-même dérivée des travaux de van Eekeren et coll. divulgués dans le document "'Improved milk-of-lime for softening of drinking water', M.W.M. van Eekeren, J.A.M. van Paassen, C.W.A.M. Merks, KIWA NV Research and Consultancy, Nieuwegein, Septembre 1993" produit et distribué par le KIWA, Institut Royal Néerlandais de l'analyse de l'eau (KIWA NV Research and Consultancy, Groningenhaven 7, P.O. Box 1072, 3430BB Nieuwegein).

La réactivité d'un lait de chaux est donc évaluée par l'évolution au cours du temps de la mesure de la conductivité d'une solution préparée en diluant une petite quantité de lait de chaux dans un grand volume d'eau déminéralisée. On repère notamment les points correspondants à une conductivité de x % pour x % = 63 %, 80 %, 90 % and 95 % de la conductivité maximale en point final (voir EN12485(2010) §6.11.6.2). Le *temps de dissolution* correspondant *t(x%)* en s, est alors obtenu du graphique conductivité vs. temps (voir Figure 2 de EN12485(2010)).

Il est connu que le taux de dissolution des particules de chaux dans l'eau déminéralisée est plus rapide (t(x%) plus petit) lorsque la taille des particules est plus petite. En d'autres termes, la réactivité du lait de chaux est généralement plus élevée lorsque ses particules constitutives sont plus petites.

Dans un mode préféré du procédé selon la présente invention, lorsque ladite suspension minérale contient ou est un lait de chaux, celui-ci présente une réactivité exprimée sous la forme d'un temps de dissolution t(90%) supérieur à 0,1 s en particulier supérieur à 0,2 s et inférieur à 10 s, en particulier inférieur à 5 s.

Lorsque le lait de chaux présente une telle réactivité, les particules de chaux éteinte présentent une taille de particules suffisamment fines pour également contribuer à la formation d'une couche minérale fine, en particulier homogène, participant à la simplification du démoulage du laitier.

La stabilité du lait de particules calciques ou de la suspension minérale peut être déterminée en utilisant la méthode de stabilité appelée test de la bouteille tel que décrit dans le document WO 2001/096240.

De préférence, lesdits additifs de ladite suspension minérale sont choisis dans le groupe constitué des dispersants et des additifs fluidifiants, tels des polycarbonates ou des polyacrylates, ou des polyphosphonates, en particulier du DTPMP.

Les dispersants ou les agents fluidifiants qui peuvent être utilisés dans le cadre de la présente invention ont été mentionné précédemment.

Plus particulièrement, ledit lait de chaux présente une teneur en particules de chaux éteinte supérieure ou égale à 25% en poids, de préférence, supérieure ou égale à 27% en poids, de préférence supérieure ou égale à 30% en poids, de préférence supérieure ou égale à 35% en poids, par rapport au poids total du lait de chaux et une teneur en particules de chaux éteinte inférieure ou égale à 55% en poids, de préférence, inférieure ou égale à 50 % en poids, de préférence inférieure ou égale à 48 % en poids, par rapport au poids total du lait de chaux.

Avantageusement, ledit lait de particules calcique présente une teneur en particules calciques supérieure ou égale à 25% en poids, de préférence, supérieure ou égale à 27% en poids, de préférence supérieure ou égale à 30% en poids, de préférence supérieure ou égale à 35% en poids, par rapport au poids total du lait de particules calciques et une teneur en particules calciques inférieure ou égale à 55% en poids, de préférence, inférieure ou égale à 50 % en poids, de préférence inférieure ou égale à 48 % en poids, par rapport au poids total du lait de particules calciques.

Dans encore un mode préféré selon la présente invention, ladite couche minérale, tapissée sur la paroi intérieure et/ou sur la paroi extérieure présente une épaisseur de couche comprise entre 0,1 et 5 mm, de préférence entre 0,15 et 3 mm, de façon plus préférentielle entre 0,2 et 2 mm, en particulier entre 0,5 et 1 mm.

D'autres formes d'utilisation sont indiquées dans les revendications annexées.

D'autres caractéristiques, détails et avantages de l'invention ressortiront de la description donnée ci-après, à titre non limitatif et en faisant référence aux exemples.

### Exemples.-

### Exemple 1 à 3.- Essais (laboratoire) d'aptitude au revêtement (coating)

Des essais ont été réalisés afin de déterminer les effets de la pulvérisation de suspensions minérales contenant des particules calciques et d'un hydrate de carbone sur des surfaces métalliques chaudes.

Pour ce faire, diverses suspensions calciques telles qu'indiquées au tableau 1.- ont été pulvérisées par air comprimé sur des tôles épaisses d'acier. L'agent dispersant, non limitatif de la présente invention, est le neomere^{®}Tech 646 commercialisé par la société Chryso. Ces tôles en acier de plusieurs centimètres d'épaisseur ont été chauffées préalablement à 300°C dans un four à résistance électrique et atmosphère non contrôlée afin de s'approcher au mieux des conditions industrielles.

**Tableau 1.-**

| Suspension calcique | Nature des particules calciques | d₅₀ (µm) | Teneur en particules calciques (% en poids de la suspension) | Additifs (nature et teneur en masse) |
|---|---|---|---|---|
| Ex1 | Ca(OH)2 | 2.67 | 46.3 | Saccharose, 0.75% en poids de la suspension ; agent dispersant, 0,4% en poids de la suspension |
| Ex2 | Ca(OH)2 | 2.67 | 27.1 | Saccharose, 0.44% en poids de la suspension ; agent dispersant,0.23% en poids de la suspension |
| Ex3 | Ca(OH)2 | 7.49 | 30.4 | Saccharose,0.75% en poids de la suspension ; agent dispersant, 0,6% en poids de la suspension |

Les suspensions des exemples 1 à 3 présentaient, de manière surprenante une grande habilité au revêtement de surfaces métalliques chaudes. Cet effet étant d'autant plus renforcé dans le cas de suspensions présentant une fraction solide dont la taille de particule était fine.

En complément, la résistance mécanique des revêtements a été évaluée au moyen d'essais de grattage et de vibration. La résistance mécanique des couches revêtue ainsi évaluée est elle aussi directement fonction des paramètres susmentionnés. Ces éléments font référence à l'effet de « colle faible » décrit ci-avant.

Les essais de grattage consistent en l'indentation de la couche revêtue au moyen d'un outil métallique tel qu'une spatule de laboratoire. Aucun phénomène de pelage ou encore de disparition complète de la couche à l'endroit indenté n'a été observé pour les suspensions des exemples 1 à 3.

Les essais de vibration consistent à faire subir des chocs aux tôles revêtues en les faisant entrer en collision avec un point fixe (bâti). Suite aux chocs et aux vibrations rémanentes subséquemment, aucun phénomène d'écaillage de la couche minérale solide n'a été observé.

### Exemple comparatifs 1 à 5.- Essais (laboratoire) d'aptitude au revêtement (coating)

Des essais ont été réalisés afin de déterminer les effets de la pulvérisation de suspensions minérales contenant des particules calciques sans hydrate de carbone sur des surfaces métalliques chaudes.

Pour ce faire, diverses suspensions calciques telles qu'indiquées au tableau 2.- ont été pulvérisées par air comprimé sur des tôles épaisses d'acier en suivant la procédure des exemples 1 à 3.

**Tableau 2.-**

| Suspension calcique | Nature des particules calciques | d₅₀ (µm) | Teneur en particules calciques (% en poids de la suspension) | Additif (nature et teneur massique) |
|---|---|---|---|---|
| EC 1 | Ca(OH)2 | 7.49 | 30.4 | Néant |
| EC 2 | Ca(OH)2 | 5.90 | 40.4 | DTPMP, 0,25% en poids de la suspension |
| EC 3 | Ca(OH)2,MgO | 9.76 | 30.0 | Néant |
| EC4 | Ca(OH)2,MgO | 8.69 | 40.0 | Néant |
| EC 5 | Ca(OH)2,MgO | 7.37 | 45.0 | Néant |

Durant les essais de grattage, un phénomène de pelage ou encore de disparition complète de la couche à l'endroit indenté a été observé pour toutes les suspensions des exemples comparatifs 1 à 5.

Durant les essais de vibration, il a pu être observé des phénomènes d'écaillage et de pulvérisation de la couche solide dans le cas des exemples comparatifs 1 à 5.

### Exemple 4.- Essais (laboratoire) d'évaluation de l'effet démoulant (stripping)

Les suspensions calciques des exemples 1 à 3 présentant la plus grande habilité au revêtement de tôle en acier chaudes, ont fait l'objet d'un test visant à déterminer l'habilité des revêtements effectués à provoquer un effet démoulant au contact de laitier de sidérurgie (et, par la même, à éviter la formation de loups dans les cuves à scorie).

En préparation de ces essais, des plaques de fonte ont été revêtues à l'aide des suspensions calciques des exemples 1 à 3. Cette préparation a permis de confirmer sur les plaques de fonte les résultats obtenus précédemment sur tôle d'acier. Les trois suspensions calciques des exemples 1 à 3 ont servi au revêtement de trois plaques de fonte. Nous avons également étudié le cas d'une plaque de fonte nue et d'une plaque de fonte revêtue d'une suspension de matériau siliceux disponible commercialement (exemples comparatifs) et utilisée dans le type d'application industrielle décrit précédemment.

### Plusieurs épaisseurs de couche minérale ont été étudiées : 110 µm, 160 µm, 180 µm et 210 µm

Du laitier de convertisseur (Basic Oxygen Furnace) a été fondu à 1650°C et versé ensuite sur les 5 plaques ayant été préparées selon la description ci-dessus.

Qualitativement, l'effet démoulant était présent pour toutes les plaques revêtues à l'aide de suspension minérale des exemples 1 à 3. Les revêtements obtenus à partir de suspensions calciques des exemples 1 à 3 ont montré un effet démoulant plus prononcé que le revêtement obtenu à partir de suspension siliceuse.

De plus, de manière surprenante, les revêtements obtenus à base de suspensions calciques ont montré un avantage important en vue de l'application industrielle. Ainsi, les revêtements obtenus à base de suspensions calciques ont montré une grande tendance à l'adhérence au laitier (et non à la plaque) ce qui est un effet recherché dans l'application industrielle afin d'éviter de causer des engraissements dans les cuves à scories.

Cet effet était d'autant plus prononcé que la couche appliquée était mince.

De plus, aucune diffusion au sein du laitier des éléments chimiques composant le revêtement n'a été observée. Ceci renforce l'idée que l'effet démoulant est provoqué par une réaction de déshydratation ou de décarbonatation du revêtement et non par une quelconque transformation chimique de l'interface revêtement/laitier.

### Exemple 5.- Essais industriels

Sur la base des résultats obtenus en laboratoire, des essais industriels de validation ont été réalisés.

Une suspension calcique a été tapissée sur la paroi intérieure dans des cuves à scories industrielles et ce, en différentes épaisseurs. La suspension calcique choisie est la suspension calcique de l'exemple 1, à savoir celle présentant les meilleurs résultats de laboratoire tant sur son aptitude au revêtement que sur celle à provoquer un effet démoulant.

Lesdites cuves à scories utilisées dans le cadre de ces essais correspondent parfaitement à la description qui en a été faite ci-avant.

Dans le cadre de ces essais, deux types de moyens d'application ont été utilisés. Dans une première approche, une méthode d'application manuelle à l'aide d'un vaporisateur à air comprimé a été utilisée. Sur base des résultats obtenus, une deuxième méthode d'application a été utilisée, automatique quant à elle.

Quelle que soit la méthode d'application, les effets des épaisseurs suivantes de revêtement ont été évalués : 200 µm, 250 µm, 300 µm (400 µm et 500 µm dans une moindre mesure).

Les résultats obtenus à l'échelle industrielle ont confirmé les résultats obtenus au laboratoire dans le cadre des deux essais décris ci-avant. En effet, la suspension calcique choisie a confirmé :
- son aptitude au revêtement homogène et uniforme de cuves à scories industrielles et ce, de manière homogène quelle que soit la méthode d'application utilisée ou l'épaisseur revêtue ;
- son aptitude à provoquer un effet démoulant au contact de laitier sidérurgique avec en ce domaine une préférence pour une épaisseur de revêtement de l'ordre de 300 µm;
- son aptitude à adhérer au laitier sidérurgique après démoulage laissant ainsi une surface métallique relativement propre avec en ce domaine une préférence pour les épaisseurs les plus faibles.

## Revendications

1. Procédé de manutention de cuve ou poche à laitier comprenant une paroi intérieure et une paroi extérieure, ledit procédé comprenant les étapes de
a) collecte d'un laitier dans ladite cuve ou poche à laitier d'un outil pyro-métallurgique,
b) transport de ladite cuve ou poche à laitier dudit outil pyro-métallurgique jusqu'à un site de dépose de laitier, typiquement un site de mise en décharge,
c) vidange de ladite cuve ou poche audit site de dépose de laitier, typiquement au site de mise en décharge pour éliminer le laitier qu'elle contient,
d) pulvérisation d'une suspension minérale sur ladite paroi intérieure de ladite cuve ou poche à laitier, préalablement à au moins une étape de ladite collecte dudit laitier, de manière à tapisser ladite paroi intérieure d'une couche minérale, et
e) mise en service de ladite cuve ou poche à laitier tapissée de ladite couche minérale en vue de la collecte de laitier a),
**caractérisé en ce que** ladite couche minérale est une couche fine tapissée sur la paroi intérieure présente une épaisseur de couche comprise entre 0,1 et 5 mm, de préférence entre 0,15 et 3 mm, de façon plus préférentielle entre 0,2 et 2 mm, en particulier entre 0,5 et 1 mm et **en ce que** ladite suspension minérale comprend une phase aqueuse, une phase minérale et éventuellement des additifs, ladite suspension minérale présente une teneur en hydrate de carbone comprise entre 0,2 et 3%, de préférence entre 0,4 et 2 %, de manière plus préférentielle entre 0,5 et 1,5 %, de façon encore plus avantageuse entre 0,5% et 1% en poids par rapport au poids total de ladite suspension minérale.

2. Procédé selon la revendication 1, dans lequel ladite phase minérale contient des particules calciques, choisies dans le groupe constitué de la chaux éteinte, de la dolomie décarbonatée au moins partiellement éteinte, du calcaire et de leurs mélanges.

3. Procédé selon la revendication 1 ou la revendication 2, dans lequel ladite suspension minérale contient un lait de particules calciques contenant des particules calciques comprise entre 20 et 60 % en poids par rapport au poids dudit lait de particules calciques.

4. Procédé selon l'une quelconque des revendications 2 à 3, dans lequel lesdites particules calciques dans le lait de particules calciques de ladite phase aqueuse présentent une taille moyenne de particules d₅₀ comprise entre 1,5 µm et et 10 µm.

5. Procédé l'une quelconque des revendications 1 à 4, dans lequel ledit hydrate de carbone est choisi dans le groupe constitué des disaccharides, tel que le sucrose ou le saccharose, du sorbitol, des monosaccharides, des oligosaccharides, du xylose, du glucose, du galactose, du fructose, du mannose, du lactose, du maltose, de l'acide glucuronique, de l'acide gluconique, de l'érythritol, du xylitol, du lactitol, du maltitol, des dextrines, des cyclodextrines, de l'inuline, du glucitol, de l'acide uronique, du rhamnose, de l'arabinose, de l'érythrose, du thréose, du ribose, de l'allose, du tréhalose, de l'acide galacturonique, et leurs mélanges.

6. Procédé selon l'une quelconque des revendications 1 à 5, dans lequel ledit hydrate de carbone est choisi dans le groupe constitué des disaccharides, tels que le sucrose ou le saccharose, du sorbitol et de leurs mélanges.

7. Procédé selon l'une quelconque des revendications 1 à 6, dans lequel ladite suspension minérale comprend un ou plusieurs additifs choisis dans le groupe des dispersants, des additifs fluidifiants et leurs mélange, en particulier des polycarbonates ou des polyacrylates ou des polyphosphonates.

8. Procédé selon l'une quelconque des revendications 2 à 7, dans lequel ledit lait de particules calciques présente une viscosité comprise entre 0,1 Pa.s et 2 Pa.s.

9. Procédé selon l'une quelconque des revendications 2 à 8, dans lequel lesdites particules calciques du lait de particules calciques présentent une taille de particules d₉₇ comprise entre 7 et 100 µm.

10. Procédé selon l'une quelconque des revendications 1 à 9, dans lequel ladite suspension minérale contenant un lait de particules calciques est un lait de chaux contenant des particules de chaux éteinte à une teneur comprise entre 20 et 60 % en poids par rapport au poids dudit lait de chaux, dans lequel ledit lait de chaux présente une réactivité exprimée sous la forme d'un temps de dissolution t(90%) supérieur à 0,1 s en particulier supérieur à 0,2 s et inférieur à 10 s, en particulier inférieur à 5 s.

11. Utilisation d'une suspension minérale pour tapisser une paroi intérieure d'une cuve ou d'une poche à laitier d'une couche minérale, dans laquelle ladite suspension minérale est pulvérisée et présente une teneur en hydrate de carbone entre 0,2 et 3% de préférence entre 0,4 et 2 %, de manière plus préférentielle entre 0,5 et 1,5 %, de façon encore plus avantageuse entre 0,5% et 1% en poids, par rapport au poids total de ladite suspension minérale.

12. Utilisation d'une suspension minérale selon la revendication 11, dans laquelle ladite couche minérale présente une épaisseur de couche comprise entre 0,1 et 5 mm, de préférence entre 0,15 et 3 mm, de façon plus préférentielle entre 0,2 et 2 mm, en particulier entre 0,5 et 1 mm.

13. Utilisation d'une suspension minérale selon la revendication 11 ou 12, dans laquelle ladite suspension minérale contient des particules calciques, choisies dans le groupe constitué de la chaux éteinte, de la dolomie décarbonatée au moins partiellement éteinte, du calcaire et de leurs mélanges et dans laquelle la couche minérale est une couche de particules calciques.

14. Utilisation d'une suspension minérale selon l'une quelconque des revendications 11 à 13, dans laquelle ladite suspension minérale contient un lait de particules calciques contenant des particules calciques comprise entre 20 et 60 % en poids par rapport au poids dudit lait de particules calciques.

15. Utilisation d'une suspension minérale selon l'une quelconque des revendications 11 à 14, dans laquelle lesdites particules calciques dans le lait de particules calciques de ladite suspension minérale présentent une taille moyenne de particules d₅₀ comprise entre 1,5 µm et et 10 µm.

16. Utilisation d'une suspension minérale selon l'une quelconque des revendications 11 à 15, dans laquelle ledit hydrate de carbone est choisi dans le groupe constitué des disaccharides, tel que le sucrose ou le saccharose, du sorbitol, des monosaccharides, des oligosaccharides, du xylose, du glucose, du galactose, du fructose, du mannose, du lactose, du maltose, de l'acide glucuronique, de l'acide gluconique, de l'érythritol, du xylitol, du lactitol, du maltitol, des dextrines, des cyclodextrines, de l'inuline, du glucitol, de l'acide uronique, du rhamnose, de l'arabinose, de l'érythrose, du thréose, du ribose, de l'allose, du tréhalose, de l'acide galacturonique, et leurs mélanges.

17. Utilisation d'une suspension minérale selon l'une quelconque des revendications 11 à 16, dans laquelle ledit hydrate de carbone est choisi dans le groupe constitué des disaccharides, tels que le sucrose ou le saccharose, du sorbitol et de leurs mélanges.

18. Utilisation d'une suspension minérale selon l'une quelconque des revendications 11 à 17, dans laquelle ledit lait de particules calciques présente une viscosité comprise entre 0,1 Pa.s et 2 Pa.s.

19. Utilisation d'une suspension minérale selon l'une quelconque des revendications 11 à 18, dans laquelle lesdites particules calciques du lait de particules calciques présentent une taille de particules d₉₇ comprise entre 7 et 100 µm.

20. Utilisation d'une suspension minérale selon l'une quelconque des revendications 11 à 19, dans laquelle ladite suspension minérale comprend un ou plusieurs additifs choisis dans le groupe des dispersants, des additifs fluidifiants et leurs mélange, en particulier des polycarbonates ou des polyacrylates ou des polyphosphonates.

## Patentansprüche

1. Verfahren zur Handhabung eines Schlackenbehälters oder einer Schlackenpfanne, der bzw. die eine Innenwand und eine Außenwand umfasst, wobei das Verfahren die folgenden Schritte umfasst
a) Sammeln einer Schlacke in dem Schlackenbehälter oder der Schlackenpfanne eines pyrometallurgischen Geräts,
b) Transport des Schlackenbehälters oder der Schlackenpfanne von dem pyrometallurgischen Gerät zu einer Schlackenablagerungsstelle, typischerweise einer Deponiestelle,
c) Leeren des Behälters oder der Pfanne an der Schlackenablagerungsstelle, typischerweise an der Deponiestelle, um die Schlacke, die er bzw. sie enthält, zu entfernen,
d) vor mindestens einem Schritt des Sammelns der Schlacke, Sprühen einer mineralischen Suspension an die Innenwand des Schlackenbehälters oder der Schlackenpfanne, um die Innenwand mit einer mineralischen Schicht auszukleiden, und
e) Einsetzen des Schlackenbehälters oder der Schlackenpfanne, der bzw. die mit der mineralischen Schicht ausgekleidet ist, zum Sammeln der Schlacke a),
**dadurch gekennzeichnet, dass** es sich bei der mineralischen Schicht um eine dünne, an die Innenwand gekleidete Schicht handelt, die eine Schichtdicke im Bereich von zwischen 0,1 und 5 mm, bevorzugt zwischen 0,15 und 3 mm, bevorzugterweise zwischen 0,2 und 2 mm, insbesondere zwischen 0,5 und 1 mm aufweist, und dadurch, dass die mineralische Suspension eine wässrige Phase, eine mineralische Phase und gegebenenfalls Additive umfasst, wobei die mineralische Suspension einen Kohlenhydratgehalt im Bereich von zwischen 0,2 und 3 Gewichts-%, bevorzugt zwischen 0,4 und 2 Gewichts-%, bevorzugterweise zwischen 0,5 und 1,5 Gewichts-%, noch vorteilhafterweise zwischen 0,5 Gewichts-% und 1 Gewichts-% in Bezug auf das Gesamtgewicht der mineralischen Suspension aufweist.

2. Verfahren nach Anspruch 1, wobei die mineralische Phase Calciumteilchen enthält, ausgewählt aus der Gruppe bestehend aus gelöschtem Kalk, mindestens teilweise gelöschtem entcarbonisiertem Dolomit, Kalkstein und deren Mischungen.

3. Verfahren nach Anspruch 1 oder Anspruch 2, wobei die mineralische Suspension eine Milch aus Calciumteilchen enthält, die Calciumteilchen im Bereich von zwischen 20 und 60 Gewichts-% in Bezug auf das Gewicht der Calciumhydroxid-Teilchen-Milch enthält.

4. Verfahren nach irgendeinem der Ansprüche 2 bis 3, wobei die Calciumteilchen in der Calciumhydroxid-Teilchen-Milch der wässrigen Phase eine durchschnittliche Teilchengröße d₅₀ im Bereich zwischen 1,5 µm und 10 µm aufweisen.

5. Verfahren nach einem der Ansprüche 1 bis 4, wobei das Kohlenhydrat ausgewählt ist aus der Gruppe bestehend aus Disacchariden, wie etwa Sucrose oder Saccharose, Sorbitol, Monosacchariden, Oligosacchariden, Xylose, Glucose, Galactose, Fructose, Mannose, Laktose, Maltose, Glucuronsäure, Gluconsäure, Erythritol, Xylitol, Lactitol, Maltitol, Dextrinen, Cyclodextrinen, Inulin, Glucitol, Uronsäure, Rhamnose, Arabinose, Erythrose, Threose, Ribose, Allose, Trehalose, Galacturonsäure, und deren Mischungen.

6. Verfahren nach irgendeinem der Ansprüche 1 bis 5, wobei das Kohlenhydrat ausgewählt ist aus der Gruppe bestehend aus Disacchariden, wie etwa Sucrose oder Saccharose, Sorbitol und deren Mischungen.

7. Verfahren nach irgendeinem der Ansprüche 1 bis 6, wobei die mineralische Suspension ein oder mehrere Additive umfasst, ausgewählt aus der Gruppe der Dispergiermittel, der fluidisierenden Additive und deren Mischungen, insbesondere Polycarbonaten oder Polyacrylaten oder Polyphosphonaten.

8. Verfahren nach irgendeinem der Ansprüche 2 bis 7, wobei die Calciumhydroxid-Teilchen-Milch eine Viskosität im Bereich von zwischen 0,1 Pa.s und 2 Pa.s aufweist.

9. Verfahren nach irgendeinem der Ansprüche 2 bis 8, wobei die Calciumteilchen der Calciumhydroxid-Teilchen-Milch eine Teilchengröße d₉₇ im Bereich von zwischen 7 und 100 µm aufweisen.

10. Verfahren nach irgendeinem der Ansprüche 1 bis 9, wobei es sich bei der mineralischen Suspension, die eine Calciumhydroxid-Teilchen-Milch enthält, um eine Kalkmilch handelt, die gelöschte Kalkteilchen in einem Gehalt im Bereich von zwischen 20 und 60 Gewichts-% in Bezug auf das Gewicht der Kalkmilch enthält, wobei die Kalkmilch eine Reaktivität, ausgedrückt in Form einer Auflösungszeit t(90 %), von größer als 0,1 s, insbesondere größer als 0,2 s und kleiner als 10 s, insbesondere kleiner als 5 s aufweist.

11. Verwendung einer mineralischen Suspension, um eine Innenwand eines Schlackenbehälters oder einer Schlackenpfanne mit einer mineralischen Schicht auszukleiden, wobei die mineralische Suspension gesprüht wird und einen Kohlenhydratgehalt von zwischen 0,2 und 3 Gewichts-%, bevorzugt zwischen 0,4 und 2 Gewichts-%, bevorzugterweise zwischen 0,5 und 1,5 Gewichts-%, noch vorteilhafterweise zwischen 0,5 Gewichts-% und 1 Gewichts-%, in Bezug auf das Gesamtgewicht der mineralischen Suspension aufweist.

12. Verwendung einer mineralischen Suspension nach Anspruch 11, wobei die mineralische Schicht eine Schichtdicke im Bereich von zwischen 0,1 und 5 mm, bevorzugt zwischen 0,15 und 3 mm, bevorzugterweise zwischen 0,2 und 2 mm, insbesondere zwischen 0,5 und 1 mm aufweist.

13. Verwendung einer mineralischen Suspension nach Anspruch 11 oder 12, wobei die mineralische Suspension Calciumteilchen enthält, ausgewählt aus der Gruppe bestehend aus gelöschtem Kalk, mindestens teilweise gelöschtem entcarbonisiertem Dolomit, Kalkstein und deren Mischungen, und wobei es sich bei der mineralischen Schicht um eine Schicht aus Calciumteilchen handelt.

14. Verwendung einer mineralischen Suspension nach irgendeinem der Ansprüche 11 bis 13, wobei die mineralische Suspension eine Calciumhydroxid-Teilchen-Milch enthält, die Calciumteilchen im Bereich von zwischen 20 und 60 Gewichts-% in Bezug auf das Gewicht der Calciumhydroxid-Teilchen-Milch enthält.

15. Verwendung einer mineralischen Suspension nach irgendeinem der Ansprüche 11 bis 14, wobei die Calciumteilchen in der Calciumhydroxid-Teilchen-Milch der mineralischen Suspension eine mittlere Teilchengröße d₅₀ im Bereich von zwischen 1,5 µm und 10 µm aufweisen.

16. Verwendung einer mineralischen Suspension nach irgendeinem der Ansprüche 11 bis 15, wobei das Kohlenhydrat ausgewählt ist aus der Gruppe bestehend aus Disacchariden, wie etwa Sucrose oder Saccharose, Sorbitol, Monosacchariden, Oligosacchariden, Xylose, Glucose, Galactose, Fructose, Mannose, Laktose, Maltose, Glucuronsäure, Gluconsäure, Erythritol, Xylitol, Lactitol, Maltitol, Dextrinen, Cyclodextrinen, Inulin, Glucitol, Uronsäure, Rhamnose, Arabinose, Erythrose, Threose, Ribose, Allose, Trehalose, Galacturonsäure, und deren Mischungen.

17. Verwendung einer mineralischen Suspension nach irgendeinem der Ansprüche 11 bis 16, wobei das Kohlenhydrat ausgewählt ist aus der Gruppe bestehend aus Disacchariden, wie etwa Sucrose oder Saccharose, Sorbitol und deren Mischungen.

18. Verwendung einer mineralischen Suspension nach irgendeinem der Ansprüche 11 bis 17, wobei die Calciumhydroxid-Teilchen-Milch eine Viskosität im Bereich von zwischen 0,1 Pa.s und 2 Pa.s aufweist.

19. Verwendung einer mineralischen Suspension nach irgendeinem der Ansprüche 11 bis 18, wobei die Calciumteilchen der Calciumhydroxid-Teilchen-Milch eine Teilchengröße d₉₇ im Bereich von zwischen 7 und 100 µm aufweisen.

20. Verwendung einer mineralischen Suspension nach irgendeinem der Ansprüche 11 bis 19, wobei die mineralische Suspension ein oder mehrere Additive umfasst, ausgewählt aus der Gruppe der Dispergiermittel, der fluidisierenden Additive und deren Mischungen, insbesondere Polycarbonaten oder Polyacrylaten oder Polyphosphonaten.

## Claims

1. A method of handling a slag pot or ladle comprising an inner wall and an outer wall, said method comprising the steps of
a) collecting a slag in said slag pot or ladle of a pyro-metallurgical tool,
b) transporting said slag pot or ladle from said pyro-metallurgical tool to a slag drop-off site, typically a landfill site,
c) emptying said pot or ladle at said slag drop-off site, typically at the landfill site to dispose of the slag contained therein,
d) spraying a mineral suspension onto said inner wall of said slag pot or ladle, prior to at least one step of said collection of said slag, so as to line said inner wall with a mineral layer, and
e) putting into service of said slag pot or ladle lined with said mineral layer for the purpose of collecting slag a),
**characterised in that** said mineral layer is a thin layer coated on the inner wall having a layer thickness of between 0.1 and 5 mm, preferably between 0.15 and 3 mm, more preferably between 0.2 and 2 mm, in particular between 0.5 and 1 mm, and **in that** said mineral suspension comprises an aqueous phase, a mineral phase and optionally additives, said mineral suspension having a carbohydrate content of between 0.2 and 3%, preferably between 0.4 and 2%, more preferably between 0.5 and 1.5%, even more advantageously between 0.5% and 1% by weight with respect to the total weight of said mineral suspension.

2. The method according to claim 1, wherein said mineral phase contains calcium particles, selected from the group consisting of slaked lime, at least partially slaked decarbonated dolomite, limestone and mixtures thereof.

3. The method according to claim 1 or claim 2, wherein said mineral suspension contains a milk of calcium particles containing calcium particles of between 20 and 60% by weight based on the weight of said milk of calcium particles.

4. The method according to any one of claims 2 to 3, wherein said calcium particles in the milk of calcium particles of said aqueous phase have an average particle size d₅₀ of between 1.5 µm and 10 µm.

5. The method according to any one of claims 1 to 4, wherein said carbohydrate is selected from the group consisting of disaccharides, such as sucrose or saccharose, sorbitol, monosaccharides, oligosaccharides, xylose, glucose, galactose, fructose, mannose, lactose, maltose, glucuronic acid, gluconic acid, erythritol, xylitol, lactitol, maltitol, dextrins, cyclodextrins, inulin, glucitol, uronic acid, rhamnose, arabinose, erythrose, threose, ribose, allose, trehalose, galacturonic acid, and mixtures thereof.

6. The method according to any one of claims 1 to 5, wherein said carbohydrate is selected from the group consisting of disaccharides, such as sucrose or saccharose, sorbitol and mixtures thereof.

7. The method according to any one of claims 1 to 6, wherein said mineral suspension comprises one or more additives selected from the group of dispersants, flow additives and mixtures thereof, in particular polycarbonates or polyacrylates or polyphosphonates.

8. The method according to any one of claims 2 to 7, wherein said milk of calcium particles has a viscosity between 0.1 Pa.s and 2 Pa.s.

9. The method according to any one of claims 2 to 8, wherein said calcium particles of the milk of calcium particles have a particle size d₉₇ of between 7 and 100 µm.

10. The method according to any one of claims 1 to 9, wherein said mineral suspension containing a milk of calcium particles is a milk of lime containing slaked lime particles at a content of between 20 and 60% by weight with respect to the weight of said milk of lime, wherein said milk of lime has a reactivity expressed as a dissolution time t(90%) of more than 0.1s, in particular of more than 0.2s, and less than 10s, in particular less than 5s.

11. A use of a mineral suspension for lining an inner wall of a ladle or a slag pot with a mineral layer, wherein said mineral suspension is pulverized and has a carbohydrate content between 0.2 and 3%, preferably between 0.4 and 2%, more preferably between 0.5 and 1.5%, even more advantageously between 0.5% and 1% by weight, based on the total weight of said mineral suspension.

12. The use of a mineral suspension according to claim 11, wherein said mineral layer has a layer thickness between 0.1 and 5 mm, preferably between 0.15 and 3 mm, more preferably between 0.2 and 2 mm, in particular between 0.5 and 1 mm.

13. The use of a mineral suspension according to claim 11 or 12, wherein said mineral suspension contains calcium particles, selected from the group consisting of slaked lime, at least partially slaked decarbonated dolomite, limestone and mixtures thereof and wherein the mineral layer is a layer of calcium particles.

14. The use of a mineral suspension according to any one of claims 11 to 13, wherein said mineral suspension contains a milk of calcium particles containing calcium particles of between 20 and 60% by weight based on the weight of said milk of calcium particles.

15. The use of a mineral suspension according to any one of claims 11 to 14, wherein said calcium particles in the milk of calcium particles of said mineral suspension have an average particle size d₅₀ of between 1.5 µm and 10 µm.

16. The use of a mineral suspension according to any one of claims 11 to 15, wherein said carbohydrate is selected from the group consisting of disaccharides, such as sucrose or saccharose, sorbitol, monosaccharides, oligosaccharides, xylose, glucose, galactose, fructose, mannose, lactose, maltose, glucuronic acid, gluconic acid, erythritol, xylitol, lactitol, maltitol, dextrins, cyclodextrins, inulin, glucitol, uronic acid, rhamnose, arabinose, erythrose, threose, ribose, allose, trehalose, galacturonic acid, and mixtures thereof.

17. The use of a mineral suspension according to any one of claims 11 to 16, wherein said carbohydrate is selected from the group consisting of disaccharides, such as sucrose or saccharose, sorbitol and mixtures thereof.

18. The use of a mineral suspension according to any one of claims 11 to 17, wherein said milk of calcium particles has a viscosity between 0.1 Pa.s and 2 Pa.s.

19. The use of a mineral suspension according to any one of claims 11 to 18, wherein said calcium particles of the milk of calcium particles have a particle size d₉₇ of between 7 and 100 µm.

20. The use of a mineral suspension according to any one of claims 11 to 19, wherein said mineral suspension comprises one or more additives selected from the group of dispersants, flow additives and mixtures thereof, in particular polycarbonates or polyacrylates or polyphosphonates.
